# EUROPEAN PATENT APPLICATION

(11) **EP 3 415 892 A1**
(43) Date of publication of application: **19.12.2018**
(21) Application number: 18171638.2
(22) Date of filing: 09.05.2018
(51) Int. Cl.: G01M 13/00, F04B 51/00, G01H 1/00, G05B 23/02

(54) **METHOD OF FAULT DETECTION IN A MACHINE**

(30) Priority: 12.06.2017 EP 17175555
(71) Applicant: Tetra Laval Holdings & Finance S.A., 1009 Pully (CH)
(72) Inventor: ZARUR, Ashraf, 224 64 Lund (SE)
(74) Representative: Tetra Pak - Patent Attorneys SE

(57) **Abstract**

A method of fault detection in a machine being configured to execute a plurality of events to provide a machine function is disclosed. Each event is associated with at least one start trigger and at least one subsequent signal of execution defining a series of event actions over a respective time cycle for each event. The method comprises determining a time stamp for each event action to obtain a sequence of time stamps for each signal of execution, and comparing the sequence of time stamps to a master sequence of time stamps to determine a difference therebetween for the series of event actions. The master sequence of time stamps corresponds to a preceding sequence of time stamps for the event actions of a calibrated execution of at least one event in said machine. The method comprising determining, for said difference, a deviation based on a calculation of a predetermined statistical measure, and detecting a fault in said machine based on said deviation.

## Description

### Technical Field

The present invention generally relates to the field of condition monitoring and fault detection. More particularly, the present invention relates to a method of fault detection in a machine being configured to execute a plurality of events to provide a machine function, a related computer program product and an apparatus configured for fault detection in a machine being configured to execute a plurality of events in systems such as filling machines or related systems for producing sealed packages.

### Background

Condition monitoring and fault detection of machine components in production lines, such as in the manufacturing of sealed packages in a filling machine or related systems, is critical for ensuring a desired functionality over a period of time. Various techniques are employed for such fault detection, e.g. monitoring distortions in the movements of the machine elements, such as vibrations, to provide for functionality control and prevent breakdown. An issue however is to reliably detect erroneous behavior at a larger scale e.g. amongst a multitude of control signals that execute various functions in the machine where each control signal executes sequences of individual events, e.g. instructions to actuators, simultaneously as sensor units communicate various status data of the functions. A problem with previous techniques is the lack of real-time monitoring of such complex systems, or that the resources needed for such monitoring would not allow a feasible implementation. An issue with previous techniques is further difficulties in detecting deviant behavior arising from the interaction of a plurality of interrelated machine modules or functions. A problem is thus how to implement a reliable maintenance strategy with a minimum impact on the production time.

It would thus be advantageous with a method for reliably and timely detecting deviant behavior or impending breakdown, in order to give the operator a time frame to plan a maintenance activity and substitute the relevant components without impacting production. Hence, an improved method for fault detection would be advantageous and in particular allowing for avoiding more of the above-mentioned problems and compromises, including providing for robust real-time identification of faulty components or aggregates of components and functionalities in a machine.

### Summary

Accordingly, examples of the present invention preferably seek to mitigate, alleviate or eliminate one or more deficiencies, disadvantages or issues in the art, such as the above-identified, singly or in any combination by providing a device according to the appended patent claims.

According to a first aspect a method of fault detection in a machine being configured to execute a plurality of events to provide a machine function is provided. Each event is associated with at least one start trigger and at least one subsequent signal of execution defining a series of event actions over a respective time cycle for each event. The method comprises determining a time stamp for each event action to obtain a sequence of time stamps for each signal of execution, and comparing the sequence of time stamps to a master sequence of time stamps to determine a difference therebetween for the series of event actions. The master sequence of time stamps corresponds to a preceding sequence of time stamps for the event actions of a calibrated execution of at least one event in said machine. The method comprising determining, for said difference, a deviation based on a calculation of a predetermined statistical measure, and detecting a fault in said machine based on said deviation.

According to a second aspect a computer program product comprising instructions which, when the program is executed by a computer, cause the computer to carry out the steps of the method according to the first aspect.

According to a third aspect an apparatus configured for fault detection in a machine being configured to execute a plurality of events to provide a machine function is provided. Each event is associated with at least one start trigger and at least one subsequent signal of execution defining a series of event actions over a respective time cycle for each event, the apparatus comprising a processing unit configured to determine a time stamp for each event action to obtain a sequence of time stamps for each signal of execution, compare the sequence of time stamps to a master sequence of time stamps to determine a difference therebetween for the series of event actions. The master sequence of time stamps corresponding to a preceding sequence of time stamps for the event actions of a calibrated execution of at least one event in said machine. The processing unit is further configured to determine, for said difference, a deviation based on a calculation of a predetermined statistical measure for detecting a fault in said machine.

Further examples of the invention are defined in the dependent claims, wherein features for the second and third aspects of the disclosure are as for the first aspect mutatis mutandis.

Some examples of the disclosure provide for an improved method for predicting fault in a machine.

Some examples of the disclosure provide for improved real-time monitoring of actuators and mechanical wear in a machine.

Some examples of the disclosure provide for improved condition monitoring based on statistical analysis of sequence of events in a machine.

Some examples of the disclosure provide for facilitated and less time-consuming identification of faulty components or aggregates of components and functionalities in a machine.

Some examples of the disclosure provide for a more efficient use of resources to identify erroneous behavior in a machine.

Some examples of the disclosure provide for improved fault detection amongst a multitude of interrelated modules in a machine.

Some examples of the disclosure provide for facilitated detection of the life-time of a machine component.

Some examples of the disclosure provide for a more predictable and efficient maintenance schedule of a machine component.

Some examples of the disclosure provide for a method of fault detection, having short execution time and thereby enabling analysis on-the-fly.

Some examples of the disclosure provide for a more efficient method of evaluating the quality of a machine.

Some examples of the disclosure provide for less time-consuming troubleshooting of a machine.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the invention are capable of will be apparent and elucidated from the following description of examples of the present invention, reference being made to the accompanying drawings, in which;
Fig. 1 is a diagram illustrating determining time stamps for series event actions in a machine according to examples of the disclosure;
Fig. 2 is a diagram illustrating determining time stamps for series event actions in a machine according to examples of the disclosure;
Fig. 3 schematically illustrates determining time stamps for series of event actions in a machine comprising a plurality of modules each comprising a plurality of functionalities, for fault detection therein according to examples of the disclosure;
Fig. 4 schematically illustrates determining the relationship of series of event actions in a machine, module and module functionality with corresponding master sequences of time stamps of a calibrated execution of events in the machine according to examples of the disclosure;
Fig. 5 is a schematic illustration of a distribution of values for a time stamp and for a corresponding time stamp in a master sequence of time stamps;
Fig. 6a is a flowchart of a method of fault detection in a machine being configured to execute a plurality of events to provide a machine function according to examples of the disclosure;
Fig. 6b is a schematic illustration of an apparatus configured for fault detection in a machine being configured to execute a plurality of events to provide a machine function and an associated method according to examples of the disclosure; and
Fig. 6c is a schematic illustration of an apparatus configured for fault detection in a machine being configured to execute a plurality of events to provide a machine function and an associated method according to examples of the disclosure.

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

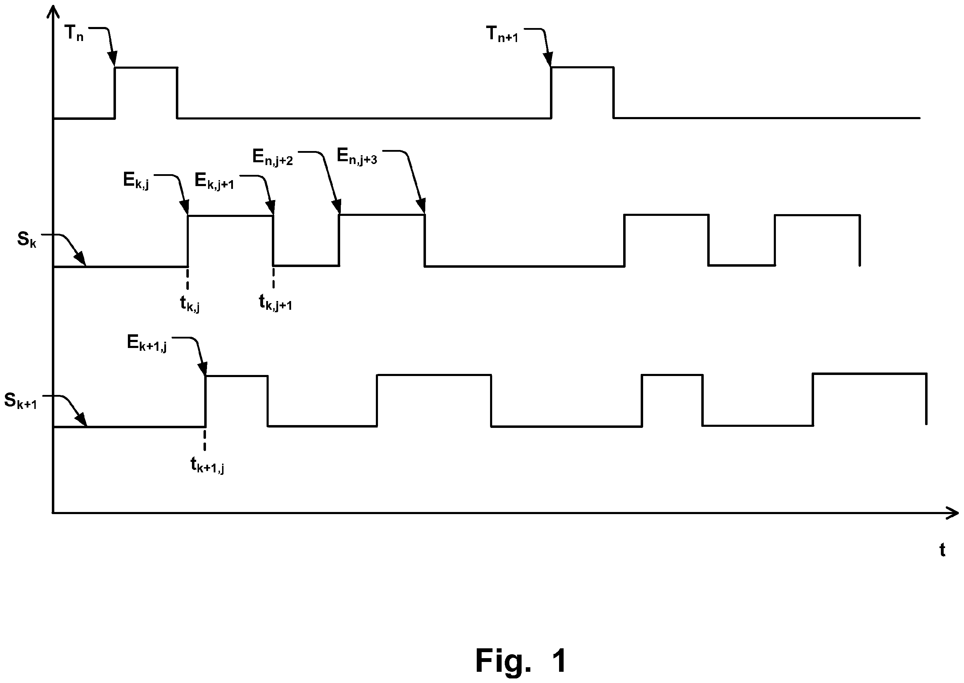

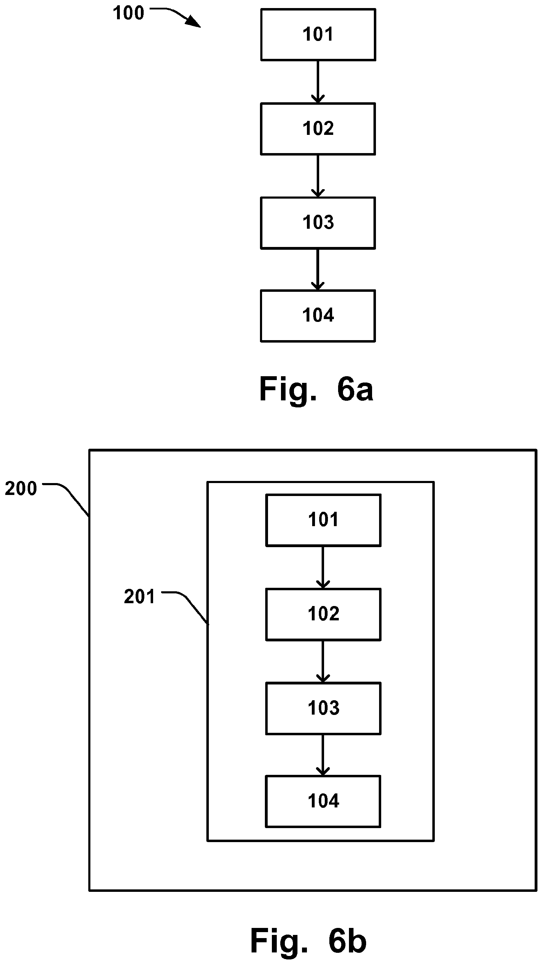

Fig. 6a illustrates a flow chart of a method 100 of fault detection in a machine being configured to execute a plurality of events to provide a machine function. The order in which the steps of the method 100 are described and illustrated should not be construed as limiting and it is conceivable that the steps can be performed in varying order. A method 100 of fault detection is thus provided. Each of the aforementioned events are associated with at least one start trigger Tₙ and at least one subsequent signal of execution Sₖ defining a series of event actions E_{k,j} over a respective time cycle for each event. Fig. 1 illustrates one example of an event and the aforementioned associated control signals, i.e. in this case digital signal pulse train, to provide for the execution of said event or function in the machine. The start trigger Tₙ can be the start of a new cycle of operation in the machine. The signals of execution, in the example of Fig. 1 given by Sₖ and Sₖ₊₁, can subsequently control which individual event actions, e.g. E_{k,j}, E_{k,j+1}, E_{k,j+2}, E_{k,j+3} (shown for the first part of the illustrated execution signal Sₖ) to be executed in order to provide for the machine to carry out the mentioned event or function. The event actions E_{k,j}, E_{k,j+1}, E_{k,j+2}, E_{k,j+3} (hereafter referred collectively to as E_{k,j} unless otherwise indicated for clarity) associated with the signal of execution Sₖ may for example be on/off signals to actuators or related sensor signals. The method 100 comprises determining 101 a time stamp t_{k,j} for each event action E_{k,j} to obtain a sequence of time stamps for each signal of execution Sₖ, as exemplified by denoting time stamps t_{k,j} and t_{k,j+1}, for events E_{k,j} and E_{k,j+1} in Fig. 1. Thus for each signal of execution Sₖ, Sₖ₊₁, a respective sequence of time stamps t_{k,j}, t_{k+1,j} is determined, corresponding to the timing of the respective series of event actions E_{k,j}, E_{k+1,j}. Any actuator- and sensor- or feedback data in the machine can thus be translated into time series by determining 101 a time stamp t_{k,j} for each event action E_{k,j}. The method 100 further comprises comparing 102 the sequence of time stamps t_{k,j} to a master sequence Mₛ of time stamps t^{M}_{k,j} to determine 103 a difference therebetween for the series of event actions E_{k,j}. The master sequence Mₛ of time stamps t^{M}_{k,j} corresponds to a preceding sequence of time stamps for the event actions E_{k,j} of a calibrated execution of at least one event in the machine. I.e. the time stamps t^{M}_{k,j} for the event actions E_{k,j} has been determined for a calibrated run of the machine with a known non-faulty behavior. The difference between the sequence of time stamps t_{k,j} and the time stamps t^{M}_{k,j} of the master sequence Mₛ may be determine 103 for each cycle in the machine. It is also conceivable that the aforementioned difference is determined at defined intervals, for optimization depending on the particular application and associated requirements. The method 100 further comprises determining 104, for said difference, a deviation based on a calculation of a predetermined statistical measure, and detecting a fault in the machine based on the aforementioned deviation. Thus, applying a statistical measure to the determined difference, it is provided for determining if a statistical significant deviation has occurred, for the particular sequence of time stamps t_{k,j} of the cycle or group of cycles being compared to the aforementioned master sequence Mₛ of time stamps t^{M}_{k,j}. The behavioral differences of the machine may thus be monitored in real-time from the obtained time series of all the event actions E_{k,j} by determining the characteristics of the difference between the series of time stamps, according to the predetermined statistical measure. It is thus provided for a facilitated and less time-consuming identification of faulty components or aggregates of components and functionalities in a machine.

An apparatus 200 configured for fault detection in a machine being configured to execute a plurality of events to provide a machine function is also provided. As mentioned, each event is associated with at least one start trigger Tₙ and at least one subsequent signal of execution Sₖ defining a series of event actions E_{k,j} over a respective time cycle for each event. The apparatus 200 comprises a processing unit 201, being schematically illustrated in Figs. 6b-c, which is configured to determine 101 a time stamp t_{k,j} for each event action to obtain a sequence of time stamps t_{k,j} for each signal of execution Sₖ. The processing unit is configured to compare 102 the sequence of time stamps t_{k,j} to a master sequence Mₛ of time stamps t^{M}_{k,j} to determine 103 a difference therebetween for the series of event actions E_{k,j}. The master sequence Mₛ of time stamps t^{M}_{k,j} corresponds to a preceding sequence of time stamps t_{k,j} for the event actions E_{k,j} of a calibrated execution of at least one event in the machine, and determine 104, for the mentioned difference, a deviation based on a calculation of a predetermined statistical measure for detecting a fault in said machine. The apparatus 200 thus provides for the advantageous benefits as described above in relation to the method 100.

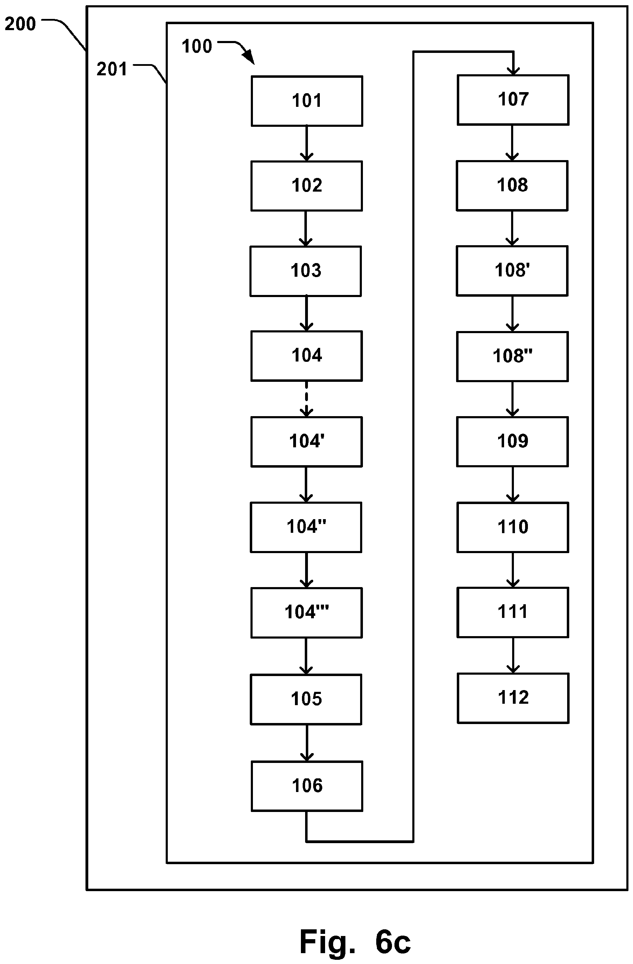

Fig. 6c illustrates a further flow chart of a method 100 of fault detection in a machine being configured to execute a plurality of events to provide a machine function. The order in which the steps of the method 100 are described and illustrated should not be construed as limiting and it is conceivable that the steps can be performed in varying order. Determining, for the mentioned difference, a deviation based on a calculation of a predetermined statistical measure, may comprise determining 104' by multivariate analysis a deviation of a plurality of series of event actions E_{k,j}. Thus, a deviation in a plurality of sequences of time stamps t_{k,j} may be determined by multivariate analysis. This allows for determining a deviation that may not be detectable by analyzing the sequences of time stamps individually, since an accumulated or aggregate error or behavioral difference may only be manifested when taking into account the event or function to be executed by the machine as a whole via the plurality of series of event actions E_{k,j}. A deviation arising over time from a combination of factors may thus be determined by the multivariate analysis. Various techniques may be applied for the multivariate analysis such as factor analysis or principal component analysis for finding deviations based on the dispersion of the data, such as the variance. This provides for detecting systematic errors of the machine. Other methods of performing the multivariate analysis may be applied such as using MANOVA tests, or Hotelling's T-squared distribution tests, for finding deviations for a group of signals such as deviations of the mean of the signals.

The processing unit 201 may accordingly be configured to determine 104' a deviation of a plurality of series of event actions E_{k,j} by multivariate analysis.

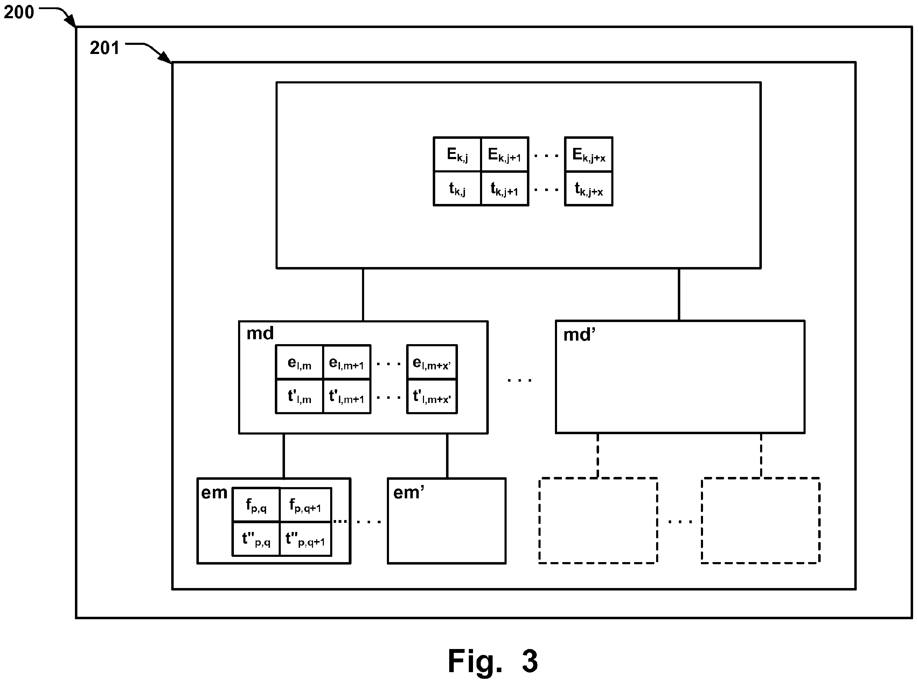

The machine may comprise a series of interrelated modules md, md', each being configured to execute at least one sub event so that the modules may collectively providing a machine function. Each sub event may be associated with a corresponding sequence of module time stamps t'_{l,m} which, in the method 100, may be determined for each sub event action e_{l,m}. Fig. 3 is a schematic illustration of modules md, md', and the corresponding sequences of module time stamps t'_{l,m}, ..., t'_{l,m+x'} determined for each sub event action e_{l,m}, ..., e_{l,m+x}. As described above, the method 100 comprises comparing 102 the sequence of time stamps t_{k,j} to a master sequence Mₛ of time stamps t^{M}_{k,j} to determine 103 a difference therebetween for the series of event actions E_{k,j}. If the difference deviates according to the predetermined statistical measure, the method 100 may further comprise determining 105 a variation of the module time stamps t'_{l,m} from a corresponding master sequence of module time stamps t^{M'}_{l,m} for the series of interrelated modules md, md', until one or more module has an associated variation deviating from the master sequence of module time stamps t^{M'}_{l,m} according to a second predetermined statistical measure, in order to detect a fault in the machine. Thus, as a deviation of an event of a particular machine function has been determined, the method 100 provides for proceeding to determining variations of the individual modules of the machine, and the associated module time stamps t'_{l,m}, from a corresponding master sequence of module time stamps t^{M'}_{l,m}, in order to determine if there is deviation according to a second statistical measure in a particular module. The master sequence of module time stamps t^{M'}_{l,m} may be determined from a preceding calibrated execution of the corresponding module with known characteristics. The second statistical measure may be the same as first statistical measure or a different statistical measure. The method 100 thus provides for isolating faults to individual modules md, md', of the machine. Analogously, since the difference and deviation as described above is determined for the series of event actions E_{k,j} of the aggregate machine function, for the machine as a whole, it is not required to perform the comparative analysis of the individual modules until a deviation has been detected, which saves resources, and improves the speed of the condition monitoring, and facilitating real-time monitoring. The example in Fig. 3 only shows two modules md, md', but the method 100 described above is applicable a general plurality of modules. The method 100 thus provides for identifying one or more modules with an erroneous behavior amongst a plurality of interrelated modules in the machine.

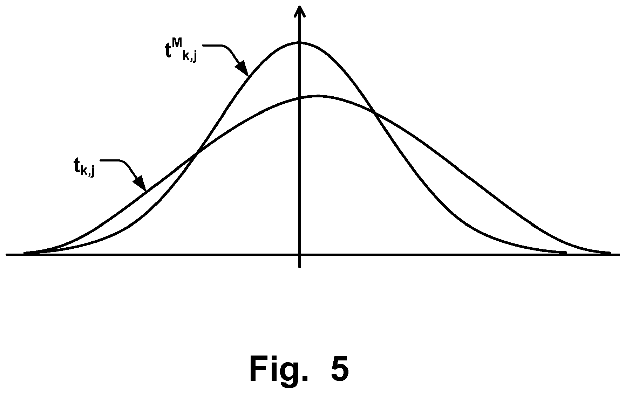

The method 100 may comprise determining 106 a distribution of values of the master sequence Mₛ of time stamps t^{M}_{k,j} for a plurality of time cycles as a master distribution. E.g. each time stamps t^{M}_{k,j} may thus assume a distribution of values, determined over a plurality of cycles, as schematically illustrated in the example of Fig. 5. The method 100 may further comprise determining 107 a distribution of values of a sequence of time stamps t_{k,j} of the event actions E_{k,j} for a plurality of subsequent time cycles. Each of the time stamps t_{k,j}, may accordingly be represented by a series of values obtained over the plurality of cycles, and thereby assume a distribution of values, as schematically illustrated in the example of Fig. 5. The method 100 may then comprise determining 108 a deviation between the distribution of values of the sequence of time stamps t_{k,j} and the master distribution (t^{M}_{k,j}) according to a predetermined statistical measure. Accordingly, as illustrated in Fig. 5, the shape of the distribution of time stamps of the functions in the machine may change over time as the machine is used. The method 100 thus provides for determining if the change can be associated with a deviant behavior according to a predetermined statistical measure, as further discussed below. The mentioned distributions may be determined over a varying number of cycles in the machine in order to optimize according to the particular application. The master distribution of time stamps may also be updated at determined intervals, also in dependence of the application, which may have different characteristic break-in periods. Thus, it is conceivable that, as the machine is operated, the cycles and respective time stamps t_{k,j} determined, may be analyzed in view of several master cycles determined at various intervals, e.g. initially when the machine is commissioned and subsequently at intervals such as in a set number of days, weeks, months. Any degradation or improvements following wear or maintenance of the machine over such intervals may thus be advantageously determined.

Determining a deviation between the distribution of values of a sequence of time stamps t_{k,j} and the master distribution according to the predetermined statistical measure may comprise determining 108' the deviation by calculating and comparing a quantified measure of a shape of said distribution associated with the time stamps t_{k,j} and the master distribution. Determining the shape of the respective distribution allows for efficiently characterize how the values, e.g. time stamps t_{j,k}, may be distributed around e.g. a mean or any other measure of central tendency. It is thus provided for facilitating the condition monitoring and detecting if a difference is deviating according to such statistical measure.

The method 100 may comprise calculating 108" and comparing a measure of a deviation from a standard normal distribution. This will provide a measure of how the shape of the data distribution is different from a standard normal distribution, e.g. if the tails of the distribution are thicker - i.e. more concentrated towards the measure of central tendency - or thinner tails - i.e. in a more even "low-profiled" distribution with a greater spread around the measure of central tendency. The shape of the data distribution can thus be considered as a measure that the describes the shape of the distribution's tails in relation to its overall shape. Calculating a quantified measure of a shape of the mentioned distributions may comprise calculating a kurtosis value of the respective distributions. Thus, kurtosis is such a measure of the shape of the distribution. There are typically three categories of kurtosis that can be displayed by a set of data. All measures of kurtosis can be compared against a standard normal distribution, or bell curve. The first category of kurtosis is a mesokurtic distribution. This type of kurtosis is the most similar to a standard normal distribution in that it also resembles a bell curve. However, a graph that is mesokurtic has fatter tails than a standard normal distribution and has a slightly lower peak. This type of kurtosis is considered normally distributed but is not a standard normal distribution. The second category is a leptokurtic distribution. Any distribution that is leptokurtic displays greater kurtosis than a mesokurtic distribution. Characteristics of this type of distribution is one with thicker tails and a substantially thin and tall peak. The other type of distribution is a platykurtic distribution, as illustrated in the example of fig. 5, discussed further below, for the time stamps t_{k,j}. These types of distributions have slender tails and a peak that's smaller than a mesokurtic distribution. Other measures of the shape of the respective distributions may be determined, such as the skewness describing asymmetry from the normal distribution in a set of data.

Determining, for said difference, a deviation based on a calculation of a predetermined statistical measure, may comprise determining 104" a deviation of a measure of dispersion of the sequence of time stamps t_{k,j} and the master sequence of time stamps t^{M}_{k,j}. The dispersion is indicative of how far the values of the distribution are removed from eachother. Thus, it may be determined that the dispersion of the values for a time stamp t_{k,j}, may be sufficiently different from a corresponding dispersion of the master distribution to indicate a statistically significant deviation. Alternatively, or in addition, the method 100 provides for determining if the values of the time stamps t_{k,j}, when determined over time cycles for respective event actions E_{k,j}, provide a dispersion from previously determined data points (according to a master sequence Mₛ), that exceeds a dispersion threshold that indicates a significant deviant behavior. The degree of dispersion may be determined by calculating the spread of the interquartile range or any other measures of dispersion such as variance, or standard deviation.

Determining, for said difference, a deviation based on a calculation of a predetermined statistical measure, may comprise determining 104"' a deviation of a measure of a central tendency of the sequence of time stamps t_{k,j} and the master sequence of time stamps t^{M}_{k,j}. Similarly as elucidated above with respect to determining a deviation based on the dispersion, the measure of central tendency can provide for efficiently determining the characteristics of the determined sequences of time stamps t_{k,j}, and/or distributions thereof, in relation to a master sequence Mₛ. Calculating the measure of central tendency may comprise calculating a mean value, such as an arithmetic mean, and/or a geometric mean, and/or a harmonic mean, and/or a generalized mean such as a quadratic mean (RMS), and/or other measures of a central tendency of the values such as a median value or a mode value, and/or differently weighted and/or truncated variants thereof.

It may be noted that normally distributed processes go from infinity to infinity but since the processes discussed in this disclosure are measured with a high resolution, i.e. in milliseconds and sometimes microseconds and the measurements are far from zero, normality tests show that the data may be approximated using normal distributions and the discussed statistical measures or tests are therefore applicable.

Turning again to Fig. 3, each of the interrelated modules may comprise one or more machine elements em, em', each being configured to execute at least one functionality such as a low-level functionality of an isolated machine element. Each functionality is associated with a corresponding sequence of function time stamps t"_{p,q} determined for each functionality action f_{p,q}. When determining a variation as discussed above in relation to the modules md, md', and the associated sub events executed therein, and the variation deviates according to the second predetermined statistical measure, the method 100 may comprise determining 109 a discrepancy of the function time stamps t"_{p,q} from a corresponding master sequence of function time stamps t^{M"}_{p,q} for the one or more machine elements em, em', until one or more machine element has an associated discrepancy deviating from the master sequence of function time stamps t^{M"}_{p,q} according to a third predetermined statistical measure. Thus, the method 100 provides for further proceeding to isolate a deviant behavior in individual elements of the separate modules md, md', in the machine, by determining corresponding sequences time stamps t"_{p,q} of the individual functions and determine the characteristics of the sequences with respect to an associated master sequence. It is thus possible to maintain determining any deviant behavior at a high machine level for an overall function of the machine by characterizing the time stamps t_{k,j}, as discussed above, e.g. by multivariate analysis, for efficient condition monitoring in real-time, while any erroneous behavior can be isolated to individual components at lower level if detected.

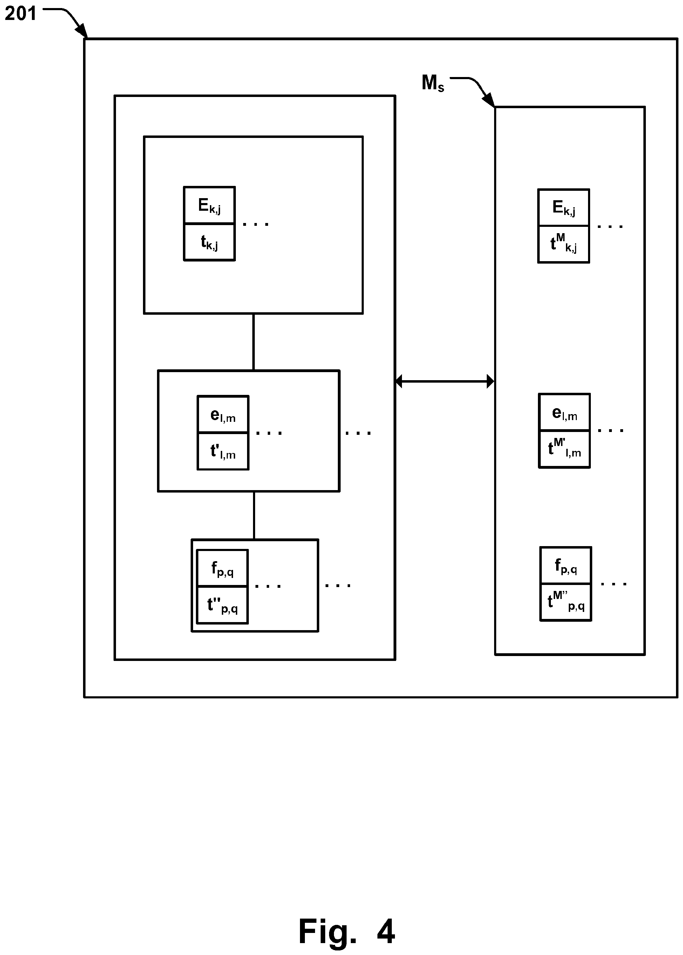

Fig. 4 is a schematic illustration of the processing unit 201 which may determine the sequences of time stamps t_{k,j}, t'_{l,m}, t"_{p,q}, for the corresponding series of actions E_{k,j}, e_{l,m}, f_{p,q}, in the machine, for determining if there is a deviation of the difference in comparison to corresponding master sequences Mₛ of time stamps t^{M}_{k,j}, t^{M'}_{k,j}, t^{M"}_{k,j}.

The method 100 may comprise determining 110 a deviation of the discrepancy in the machine elements em, em', by univariate analysis (i.e. only one variable is involved) of the function time stamps t"_{p,q} and the master sequence of function time stamps t^{M"}_{p,q}. This may provide for an efficient determining of deviations in the machine elements em, em'.

The event actions E_{k,j}, e_{l,m}, f_{p,q}, may comprise at least one actuator signal for timing start- and stop events and durations of an action of an actuator relative to the start trigger. The time stamps t_{k,j}, are thus being associated with the start- and stop events and durations.

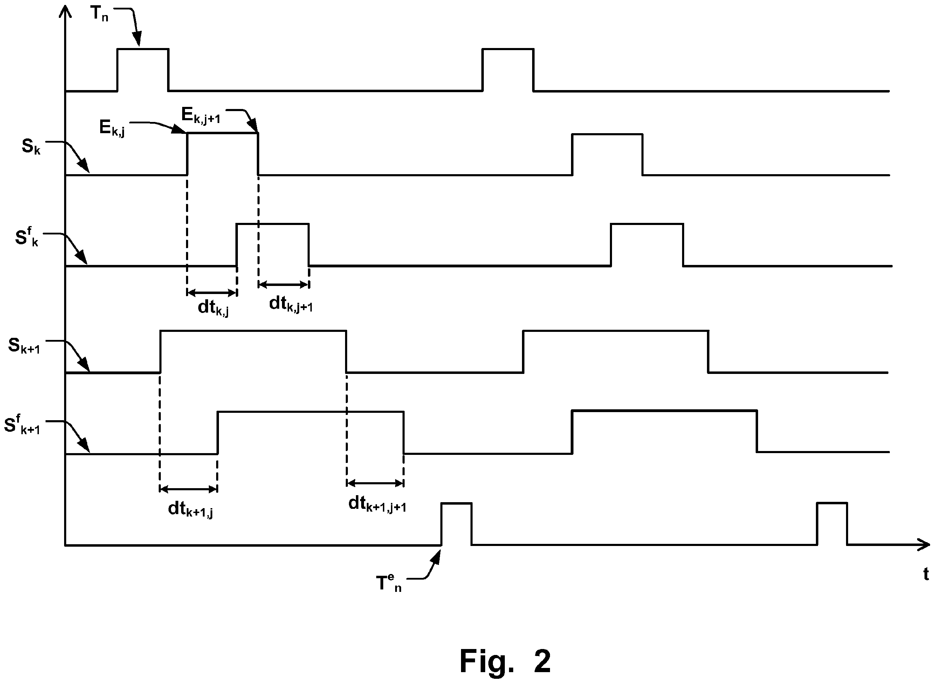

The method 100 may comprise timing 111 response times dt_{k,j} of event actions with at least one response signal S^{f}ₖ in the machine. Fig. 2 illustrates one example where the response times dt_{k,j} and dt_{k,j+1} are determined for a pulse defined by event actions E_{k,j} and E_{k,j+1} of the execution signal Sₖ, by registering the timing of when the event actions E_{k,j} and E_{k,j+1} have been executed with the response signal S^{f}ₖ. Fig. 2 illustrates an example of having two response signals S^{f}ₖ, S^{f}ₖ₊₁, but a general plurality may be utilized, for example one or more for each execution signal Sₖ. The cycle may be started by trigger Tₙ and stopped with end trigger T^{e}ₙ. The method 100 may comprise determining 112 a deviation of the response times dt_{k,j}, dt_{k,j+1}, from a corresponding master sequence of response times t^{d}_{k,j} according to a predetermined statistical measure to detect a fault in the machine. Thus, the response times dt_{k,j} may be determined for the event actions E_{k,j} and characterized as described above with respect to the time stamps t_{k,j} in relation to a master sequence of response times t^{d}_{k,j}, in order to detect if the differences can be associated with a deviating behavior. Such characterization of response times dt_{k,j} may be combined with the previously described characterization of the time stamps t_{k,j}, t'_{l,m}, t"_{p,q}, to provide for an efficient fault detection in the machine.

A computer program product is provided comprising instructions which, when the program is executed by a computer, cause the computer to carry out the steps of the method 100 as described above in relation to Figs. 1 - 6.

Although the examples of the disclosure discuss digital signal pulse trains, it is conceivable that the method 100 as discussed above in relation to Figs. 1 - 6 may be applied to analogous signals that provide for the execution of the events or functions in the machine.

The present invention has been described above with reference to specific examples. However, other examples than the above described are equally possible within the scope of the invention. The different features and steps of the invention may be combined in other combinations than those described. The scope of the invention is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. A method (100) of fault detection in a machine being configured to execute a plurality of events to provide a machine function, each event being associated with at least one start trigger (Tₙ) and at least one subsequent signal of execution (Sₖ) defining a series of event actions (E_{k,j}) over a respective time cycle for each event, the method comprises
determining (101) a time stamp (t_{k,j}) for each event action to obtain a sequence of time stamps for each signal of execution,
comparing (102) the sequence of time stamps to a master sequence (Mₛ) of time stamps (t^{M}_{k,j}) to determine (103) a difference therebetween for the series of event actions, the master sequence of time stamps corresponding to a preceding sequence of time stamps for the event actions of a calibrated execution of at least one event in said machine, and
determining (104), for said difference, a deviation based on a calculation of a predetermined statistical measure, and detecting a fault in said machine based on said deviation.

2. Method according to claim 1, wherein determining, for said difference, a deviation based on a calculation of a predetermined statistical measure, comprises
determining (104') by multivariate analysis a deviation of a plurality of series of event actions.

3. Method according to claim 1 or 2, wherein the machine comprises a series of interrelated modules (md, md') each being configured to execute at least one sub event for providing said machine function, wherein each sub event is associated with a corresponding sequence of module time stamps (t'_{l,m}) determined for each sub event action (e_{l,m}),
whereby, when determining said difference and the difference deviates according to said predetermined statistical measure, the method comprises
determining (105) a variation of the module time stamps from a corresponding master sequence of module time stamps (t^{M'}_{l,m}) for the series of interrelated modules until one or more module has an associated variation deviating from the master sequence of module time stamps according to a second predetermined statistical measure for detecting a fault in said machine.

4. Method according to any of claims 1 - 3, comprising
determining (106) a distribution of values of said master sequence of time stamps for a plurality of time cycles as a master distribution,
determining (107) a distribution of values of said sequence of time stamps for a plurality of time cycles,
determining (108) a deviation between said distribution of values of said sequence of time stamps and the master distribution according to said predetermined statistical measure.

5. Method according to any of claims 1 - 4, wherein determining, for said difference, a deviation based on a calculation of a predetermined statistical measure, comprises
determining (104") a deviation of a measure of dispersion of the sequence of time stamps and the master sequence of time stamps.

6. Method according to any of claims 1 - 5, wherein determining, for said difference, a deviation based on a calculation of a predetermined statistical measure, comprises
determining (104"') a deviation of a measure of a central tendency of the sequence of time stamps and the master sequence of time stamps.

7. Method according to claim 3, wherein each of the interrelated modules comprises one or more machine elements (em, em') each being configured to execute at least one functionality, wherein each functionality is associated with a corresponding sequence of function time stamps (t"_{p,q}) determined for each functionality action (f_{p,q}),
whereby, when determining said variation and the variation deviates according to said second predetermined statistical measure, the method comprises
determining (109) a discrepancy of the function time stamps from a corresponding master sequence of function time stamps (t^{M"}_{p,q}) for the one or more machine elements until one or more machine element has an associated discrepancy deviating from the master sequence of function time stamps according to a third predetermined statistical measure.

8. Method according to claim 7, comprising determining (110) a deviation of the discrepancy by univariate analysis of the function time stamps and the master sequence of function time stamps.

9. Method according to any of claims 1 - 8, wherein the event actions comprise at least one actuator signal for timing start- and stop events and durations of an action of an actuator relative to the start trigger, the time stamps being associated with said start- and stop events and durations.

10. Method according to any of claims 1 - 9, comprising
timing (111) response times (dt_{k,j}) of event actions with at least one response signal (S^{f}ₖ) in the machine, and
determining (112) a deviation of the response times from a corresponding master sequence of response times (t^{d}_{k,j}) according to a predetermined statistical measure for detecting a fault in said machine.

11. Method according to claim 4, wherein determining a deviation between the distribution and the master distribution according to said predetermined statistical measure comprises
determining (108') the deviation by calculating and comparing a quantified measure of a shape of the distribution and the master distribution.

12. Method according to claim 11, comprising calculating (108") and comparing a measure of a deviation from a standard normal distribution.

13. A computer program product comprising instructions which, when the program is executed by a computer, cause the computer to carry out the steps of the method according to any of claims 1 - 11.

14. An apparatus (200) configured for fault detection in a machine being configured to execute a plurality of events to provide a machine function, each event being associated with at least one start trigger (Tₙ) and at least one subsequent signal of execution (Sₖ) defining a series of event actions (E_{k,j}) over a respective time cycle for each event, the apparatus comprising a processing unit (201) configured to
determine (101) a time stamp (t_{k,j}) for each event action to obtain a sequence of time stamps for each signal of execution,
compare (102) the sequence of time stamps to a master sequence (Mₛ) of time stamps (t^{M}_{k,j}) to determine (103) a difference therebetween for the series of event actions, the master sequence of time stamps corresponding to a preceding sequence of time stamps for the event actions of a calibrated execution of at least one event in said machine, and
determine (104), for said difference, a deviation based on a calculation of a predetermined statistical measure for detecting a fault in said machine.

15. Apparatus according to claim 14, wherein the processing unit is configured to determine (104') by multivariate analysis the deviation between a plurality of series of event actions and the master sequence of time stamps.
